# EUROPEAN PATENT APPLICATION

(11) **EP 4 749 780 A1**
(43) Date of publication of application: **27.05.2026**
(21) Application number: 24842944.1
(22) Date of filing: 03.07.2024
(51) Int. Cl.: H01M 50/15, H01M 10/48, H01M 50/342, H01M 50/548, H01M 50/553

(54) **BATTERY CELL**

(30) Priority: 18.07.2023 JP 2023116468
(71) Applicant: AESC Japan Ltd., Yokohama-shi, Kanagawa 220-0012 (JP)
(72) Inventor: NAKAI, Masayuki, Zama-shi, Kanagawa 252-0012 (JP)
(74) Representative: Mathys & Squire
(86) International application number: PCT/JP2024/024088
(87) International publication number: WO 2025/018151

(57) **Abstract**

A battery cell (10) includes a battery element (100) and a front lid member (210) that is spaced from the end surface of the battery element (100) by a predetermined distance and at least partially faces the end surface. The front lid member (210) has a front protrusion (214) that is positioned on the side where the end surface of the battery element (100) is positioned. The front lid member (210) defines a front recessed space (216) that is recessed from the side of the front lid member (210) opposite to the side where the end surface of the battery element (100) is positioned toward the front protrusion (214).

## Description

### TECHNICAL FIELD

The present invention relates to a battery cell.

### BACKGROUND ART

In recent years, various battery cells have been developed. The battery cell includes a battery element having a positive electrode, a negative electrode, and a separator.

Patent Document 1 discloses an example of a battery cell. The battery cell includes an exterior material that seals the battery element. The battery element is provided with a positive electrode lead and a negative electrode lead. A temperature sensor is disposed on the negative electrode lead.

Patent Document 2 discloses disposing a temperature sensor on a side surface side of a single battery.

Patent Document 3 discloses inserting a temperature sensor into a hole provided in a cell container that accommodates a group of electrode plates and an upper lid.

### RELATED DOCUMENT

### PATENT DOCUMENT

Patent Document 1: Japanese Unexamined Patent Publication No. 2007-335352
Patent Document 2: Japanese Unexamined Patent Publication No. 2013-171699
Patent Document 3: Japanese Unexamined Patent Publication No. 2002-50411

### SUMMARY OF THE INVENTION

### TECHNICAL PROBLEM

The battery cell may include a structure that is spaced from the end surface of the battery element by a predetermined distance and at least partially faces the end surface. However, if the structure merely faces the end surface of the battery element, it can be difficult to improve the functionality of the structure.

An example of the object of the present invention is to improve the functionality of the structure that at least partially faces the end surface of the battery element. Other objects of the present invention will be apparent from the description of the present specification.

### SOLUTION TO PROBLEM

An aspect of the present invention is as follows.
1. A battery cell including:
   a battery element, and
   a structure that is spaced from an end surface of the battery element by a predetermined distance and at least partially faces the end surface,
   in which the structure has a protrusion that is positioned on a side where the end surface of the battery element is positioned, and
   the structure defines a recessed space that is recessed from a side of the structure opposite to the side where the end surface of the battery element is positioned toward the protrusion.
2. The battery cell according to 1., further including a temperature sensor at least a part of which is arranged inside the recessed space.
3. The battery cell according to 1. or 2., in which the protrusion discharges a gas generated from the battery element when abnormal heat generation occurs in the battery element.
4. The battery cell according to any one of 1. to 3., in which the structure defines a plurality of the recessed spaces.
5. The battery cell according to any one of 1. to 4., in which the structure has a lid member that covers the end surface of the battery element.
6. The battery cell according to any one of 1. to 5., in which the structure has a conductor that is electrically connected to the battery element.

### ADVANTAGEOUS EFFECTS OF INVENTION

According to the aspect of the present invention, the functionality of the structure that at least partially faces the end surface of the battery element can be improved.

### BRIEF DESCRIPTION OF THE DRAWINGS

[FIG. 1] A perspective view of a battery cell according to an embodiment.
[FIG. 2] A perspective view of the battery cell according to the embodiment with an exterior film removed.
[FIG. 3] A cross-sectional view taken along line A-A of FIG. 1.
[FIG. 4] A perspective view of a front lid member according to a first variant of the embodiment.
[FIG. 5] A cross-sectional view of the battery cell according to the first variant of the embodiment at a position corresponding to a cross section taken along line B-B of FIG. 4.
[FIG. 6] A perspective view of a front lid member according to a second variant of the embodiment.
[FIG. 7] A cross-sectional view of the battery cell according to the second variant of the embodiment at a position corresponding to a cross section taken along line C-C of FIG. 6.
[FIG. 8] A perspective view of a front lid member according to a third variant of the embodiment.
[FIG. 9] A cross-sectional view of a battery cell according to a fourth variant of the embodiment.
[FIG. 10] A cross-sectional view of a front conductor according to a fifth variant of the embodiment.
[FIG. 11] A cross-sectional view of a battery cell according to a variant.

### DESCRIPTION OF EMBODIMENTS

Hereinafter, embodiments and variants of the present invention will be described with reference to the drawings. In all drawings, the same constituent elements are denoted by the same reference signs, and a detailed description thereof will not be repeated.

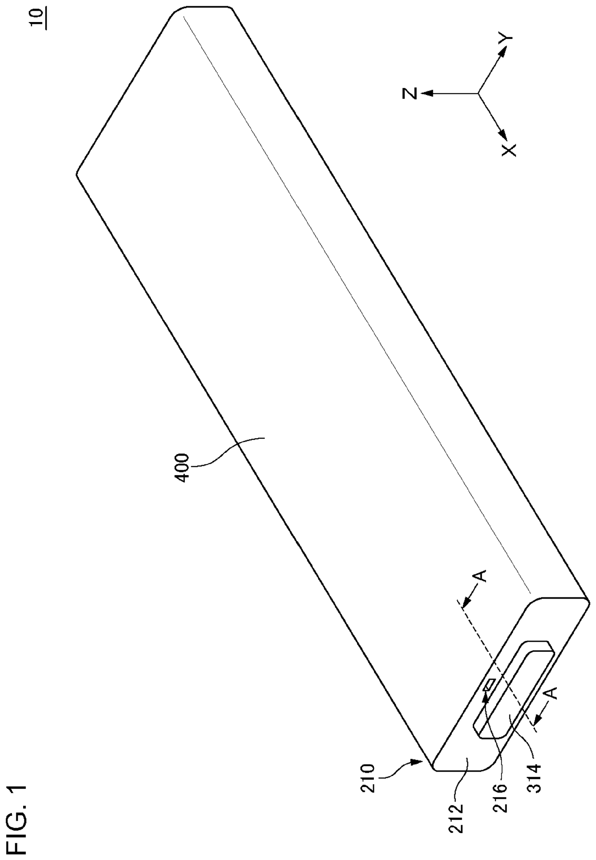

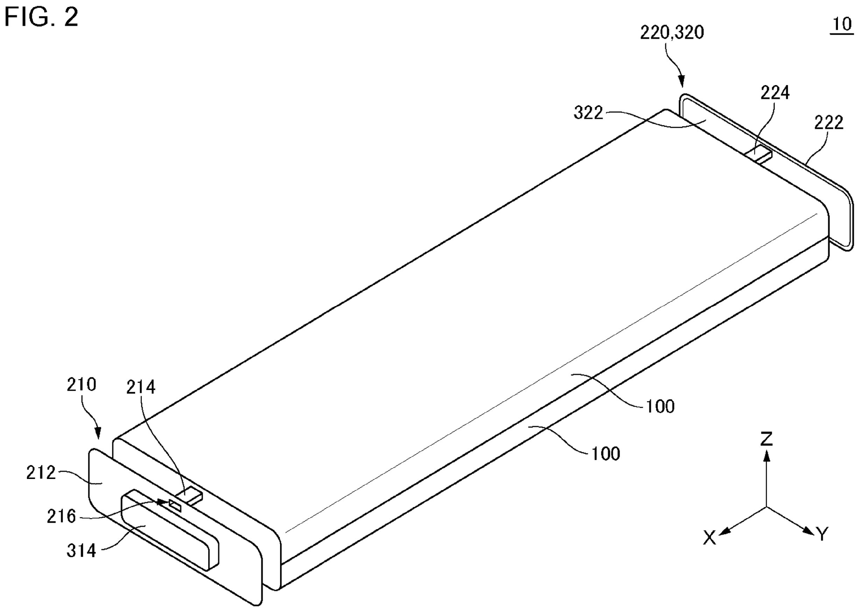

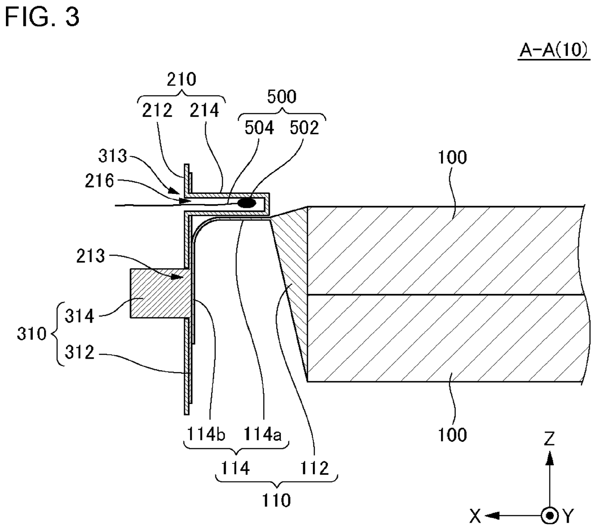

FIG. 1 is a perspective view of a battery cell 10 according to the embodiment. FIG. 2 is a perspective view of the battery cell 10 according to the embodiment with an exterior film 400 removed. FIG. 3 is a cross-sectional view taken along line A-A of FIG. 1. In FIGS. 1 and 2, for description, a temperature sensor 500 shown in FIG. 3 is removed. In FIG. 3, for description, the exterior film 400 shown in FIG. 1 is removed.

In each of the drawings, X direction, Y direction, and Z direction are illustrated for description. The X direction indicates a front-rear direction of the battery cell 10. The Y direction is orthogonal to the X direction. The Y direction indicates a left-right direction of the battery cell 10. The Z direction is orthogonal to both the X direction and the Y direction. The Z direction indicates an up-down direction of the battery cell 10. A direction indicated by an arrow indicating the X direction, a direction indicated by an arrow indicating the Y direction, and a direction indicated by an arrow indicating the Z direction are a front direction, a left direction, and an up direction, respectively. However, the relationship between the X direction, the Y direction, the Z direction, the front-rear direction, the left-right direction, and the up-down direction of the battery cell 10 is not limited to this example. In FIG. 3, a white circle with a black dot indicating the Y direction indicates that a direction from a back side of a paper plane toward a front side is a direction indicated by an arrow.

As shown in FIGS. 1 to 3, the battery cell 10 includes two battery elements 100, a front lid member 210, a rear lid member 220, a front conductor 310, a rear conductor 320, the exterior film 400, and the temperature sensor 500.

As shown in FIGS. 2 and 3, the two battery elements 100 are stacked in the Z direction. Each of the battery elements 100 has a substantially rectangular parallelepiped shape. The dimension of each battery element 100 in the X direction is a dimension of each battery element 100 in the long-side direction. The dimension of each battery element 100 in the Y direction is a dimension of each battery element 100 in the short-side direction. The dimension of each battery element 100 in the Z direction is a dimension of each battery element 100 in the thickness direction. However, the shape of the battery element 100 is not limited to this example. The number of battery elements 100 included in the battery cell 10 may be only one or three or more.

Each battery element 100 includes at least one positive electrode (not shown), at least one negative electrode (not shown), and at least one separator (not shown). For example, the plurality of positive electrodes and the plurality of negative electrodes are alternately stacked in the Z direction. At least a part of the separator is positioned between the positive electrode and the negative electrode adjacent to each other in the Z direction. Specifically, for example, each of the plurality of sheet-shaped separators is positioned between the positive electrode and the negative electrode adjacent to each other in the Z direction. However, one sheet-shaped separator may be alternately folded at the left end part of the positive electrode and the right end part of the negative electrode or alternately folded at the right end part of the positive electrode and the left end part of the negative electrode. Alternatively, the positive electrode, the negative electrode, and the separator may be wound such that the separator is disposed between the positive electrode and the negative electrode. For example, the positive electrode, the negative electrode, and the separator are wound with both surfaces of one of the positive electrode and the negative electrode covered with the separator. In another example, a stacked body including a plurality of unit stacked bodies each including a positive electrode, a separator, and a negative electrode in this order may be wound. However, the winding structure of the positive electrode, the negative electrode, and the separator is not limited to these examples.

In the embodiment, the battery cell 10 is a battery cell including an electrolyte solution. However, the battery cell 10 may be a solid-state battery. In the solid-state battery, a solid electrolyte layer is provided at a portion corresponding to the separator. The solid-state battery does not include the electrolyte solution.

Hereinafter, unless otherwise specified, each battery element 100 will be described as including a plurality of positive electrodes and a plurality of negative electrodes alternately stacked in the Z direction.

As shown in FIG. 3, a plurality of positive electrode current collectors 110 is drawn out from the front end surface of each battery element 100. The plurality of positive electrode current collectors 110 is integrated with the plurality of positive electrodes of each battery element 100 and are electrically connected to the plurality of positive electrodes of each battery element 100. The plurality of positive electrode current collectors 110 is bundled together into a bundle. In FIG. 3, the plurality of positive electrode current collectors 110 bundled together is schematically shown as a single solid. As shown in FIG. 3, the bundled bundle of the plurality of positive electrode current collectors 110 includes a tapered bundle portion 112 and an extended bundle portion 114. In the tapered bundle portion 112, a distance in the Z direction between the positive electrode current collectors 110 adjacent to each other in the Z direction decreases toward the front. The front end part of the tapered bundle portion 112 is offset to the upper side with respect to the Z direction center of the two positive electrode current collectors 110. The plurality of positive electrode current collectors 110 in the extended bundle portion 114 is joined to each other by a joining method such as ultrasonic welding. From the viewpoint of the Y direction, the plurality of positive electrode current collectors 110 of the extended bundle portion 114 is drawn out in a substantially L-shape from the front end part of the tapered bundle portion 112. Specifically, the extended bundle portion 114 includes a first extended bundle portion 114a and a second extended bundle portion 114b. The first extended bundle portion 114a extends from the front end part of the tapered bundle portion 112 in the X direction toward the front. The second extended bundle portion 114b is bent downward with respect to the front end part of the first extended bundle portion 114a and extends in the Z direction. However, the method of drawing the plurality of positive electrode current collectors 110 is not limited to the example shown in FIG. 3.

Negative electrode current collectors (not shown) are drawn out from the rear end surface of each battery element 100 in the same manner as the plurality of positive electrode current collectors 110 drawn out from the front end surface of each battery element 100. The plurality of negative electrode current collectors is integrated with the plurality of negative electrodes of each battery element 100 and are electrically connected to the plurality of negative electrodes of each battery element 100.

As shown in FIG. 3, the front lid member 210 includes a front lid plate 212 and a front protrusion 214. The front lid member 210 is a structure that is spaced from the front end surface of the battery element 100 by a predetermined distance in the X direction and at least partially faces the front end surface.

As shown in FIG. 3, the front lid plate 212 covers the front end surface of the battery element 100 with the rear surface of the front lid plate 212 and the front end surface of the battery element 100 spaced from each other in the X direction. The front lid plate 212 is, for example, a resin plate. As shown in FIG. 2, the front lid plate 212 has a substantially rectangular shape having a pair of long sides substantially parallel to the Y direction, a pair of short sides substantially parallel to the Z direction, and four rounded corners as viewed from the front. However, the shape of the front lid plate 212 is not limited to this example.

As shown in FIG. 3, the front protrusion 214 is positioned on the rear side of the front lid plate 212. The front protrusion 214 and the front lid plate 212 are integrated with each other. For example, the front protrusion 214 and the front lid plate 212 are integrally formed by resin molding. The front protrusion 214 according to the embodiment has a substantially quadrangular prism shape. However, the shape of the front protrusion 214 is not limited thereto.

The front lid member 210 defines a front recessed space 216. The front recessed space 216 is recessed from the front side of the front lid plate 212 toward the front protrusion 214. For example, the front recessed space 216 is a recessed portion formed by resin molding of the front lid plate 212 and the front protrusion 214. The front recessed space 216 according to the embodiment has a substantially quadrangular prism shape. However, the shape of the front recessed space 216 is not limited thereto.

As shown in FIG. 2, the front protrusion 214 and the front recessed space 216 are offset to the upper side with respect to the center portion of the front lid plate 212 in the Y direction and the Z direction as viewed from the front. The dimension of the front lid plate 212 in the Y direction is larger than the dimension of the front lid plate 212 in the Z direction. Therefore, the strength of the front lid member 210 can be improved where the front protrusion 214 is provided on the upper or lower portion with respect to the center portion of the front lid plate 212 in the Y direction and the Z direction as compared with where the front protrusion 214 and the front recessed space 216 are provided on the left or right portion with respect to the center portion of the front lid plate 212 in the Y direction and the Z direction. However, the position where the front protrusion 214 is provided is not limited to the example shown in FIGS. 2 and 3. For example, the front protrusion 214 and the front recessed space 216 may be provided on the left or right portion with respect to the center portion of the front lid plate 212 in the Y direction and the Z direction.

The description of the front lid member 210 according to the embodiment can be applied to the rear lid member 220. As shown in FIG. 2, the rear lid member 220 according to the embodiment includes a rear lid plate 222 corresponding to the front lid plate 212 and a rear protrusion 224 corresponding to the front protrusion 214, in the same manner as the front lid member 210 according to the embodiment. The rear lid plate 222 covers the rear end surface of the battery element 100. The rear protrusion 224 is positioned on the front side of the front protrusion 214. The rear lid member 220 according to the embodiment defines a rear recessed space that is recessed from the rear side of the rear lid plate 222 toward the rear protrusion 224, in the same manner as the front lid member 210 according to the embodiment.

As shown in FIG. 3, the front conductor 310 includes a front barrier conductor 312 and a front protruding conductor 314.

As shown in FIG. 3, the front barrier conductor 312 covers at least a part of the rear surface of the front lid plate 212. When the front barrier conductor 312 covers at least a part of the rear surface of the front lid plate 212, the front protrusion 214 of the front lid member 210 penetrates a conductor hole 313 provided at the Y direction center portion of the upper part of the front barrier conductor 312. The front barrier conductor 312 is, for example, a metal. The front barrier conductor 312 is less likely to transmit moisture than the front lid plate 212. Therefore, when the front barrier conductor 312 is provided, moisture reaching each battery element 100 from the front side of the front lid member 210 can be reduced as compared to when the front barrier conductor 312 is not provided.

As shown in FIG. 3, the front protruding conductor 314 is positioned at the center portion of the front surface of the front barrier conductor 312 in the Y direction and the Z direction. The front protruding conductor 314 and the front barrier conductor 312 are integrated with each other. When the front barrier conductor 312 covers at least a part of the rear surface of the front lid plate 212, the front protruding conductor 314 penetrates a central hole 213 provided at the center portion of the front lid plate 212 in the Y direction and the Z direction.

In the example shown in FIG. 3, the front protruding conductor 314 has a solid structure. For example, the front conductor 310 is formed by joining a conductor plate that is the front barrier conductor 312 and a conductor block that is the front protruding conductor 314 to each other. Alternatively, the front conductor 310 may be formed by integrally extrusion-molding the front barrier conductor 312 and the front protruding conductor 314. When the front protruding conductor 314 has a solid structure, the heat generation of the front conductor 310 can be suppressed as compared to when the front protruding conductor 314 is protruded from the front barrier conductor 312 by embossing and a space recessed from the front barrier conductor 312 is present behind the front protruding conductor 314A.

The rear surface of the front barrier conductor 312 and the front surface of the second extended bundle portion 114b are joined to each other by a joining method such as laser welding and ultrasonic welding. Therefore, the front protruding conductor 314 and the plurality of positive electrodes of each battery element 100 are electrically connected to each other via the front barrier conductor 312 and the plurality of positive electrode current collectors 110. Therefore, the front protruding conductor 314 is a positive electrode terminal of the battery cell 10. However, the electrical connection between the front conductor 310 and each battery element 100 is not limited to the above example. For example, the front conductor 310 and the plurality of positive electrode current collectors 110 may be electrically connected to each other via another conductor disposed between the front conductor 310 and the plurality of positive electrode current collectors 110.

In the example shown in FIGS. 1 and 2, one front protruding conductor 314 is provided in the front barrier conductor 312. However, a plurality of front protruding conductors 314 may be provided in the front barrier conductor 312.

The description of the front conductor 310 according to the embodiment can be applied to the rear conductor 320. As shown in FIG. 2, the rear conductor 320 according to the embodiment includes a rear barrier conductor 322 corresponding to the front barrier conductor 312 and a rear protruding conductor (not shown) corresponding to the front protruding conductor 314, in the same manner as the front conductor 310 according to the embodiment.

As shown in FIG. 1, the exterior film 400 is wound around the battery element 100, the front lid member 210, and the rear lid member 220 around the X direction. The exterior film 400 has a substantially tubular shape that is open forward and rearward. The front lid member 210 is disposed inside the front opening of the exterior film 400. The rear lid member 220 is disposed inside the rear opening of the exterior film 400. Therefore, the front lid member 210, the rear lid member 220, and the exterior film 400 form an accommodating space that accommodates the battery element 100, the plurality of positive electrode current collectors 110, and the plurality of negative electrode current collectors. The accommodating space accommodates the battery element 100, the plurality of positive electrode current collectors 110, the plurality of negative electrode current collectors, and an electrolyte solution (not shown) .

The outer peripheral portion of the front lid plate 212 around the X direction and the inner peripheral portion of the front end part of the exterior film 400 around the X direction are joined to each other by, for example, thermal welding. Therefore, a sealing portion is formed between the outer peripheral portion of the front lid plate 212 around the X direction and the inner peripheral portion of the front end part of the exterior film 400 around the X direction.

The outer peripheral portion of the rear lid plate 222 around the X direction and the inner peripheral portion of the rear end part of the exterior film 400 around the X direction are joined to each other by, for example, thermal welding. Therefore, a sealing portion is formed between the outer peripheral portion of the rear lid plate 222 around the X direction and the inner peripheral portion of the rear end part of the exterior film 400 around the X direction.

For example, the exterior film 400 has a winding portion that is wound around the battery element 100, the front lid member 210, and the rear lid member 220 around the X direction in one turn, and two drawn portions that are drawn out from both ends of the winding portion around the X direction. The two drawn portions are joined to each other by, for example, thermal welding. Therefore, a sealing portion is formed between the two drawn portions.

The temperature sensor 500 is a thermistor. As shown in FIG. 3, the temperature sensor 500 includes a sealing body 502 and a dumet wire 504. The sealing body 502 is, for example, glass that seals a chip such as a thermistor chip. The dumet wire 504 is electrically connected to the chip sealed in the sealing body 502. However, the structure of the temperature sensor 500 is not limited to the example shown in FIG. 3.

As shown in FIG. 3, the sealing body 502 is disposed at the rear end part of the front recessed space 216. The dumet wire 504 is drawn out from the rear end part of the sealing body 502 to the outside of the front recessed space 216 through an opening on the front side of the front recessed space 216. Therefore, the front recessed space 216 functions as an accommodating space for accommodating at least a part of the temperature sensor 500. Therefore, in the embodiment, the functionality of the front lid member 210 can be improved as compared to when the front recessed space 216 is not provided.

In the example shown in FIG. 3, the temperature sensor 500 is offset to the upper side with respect to the Z direction center of the front lid plate 212. At least a part of the first extended bundle portion 114a is offset to the upper side with respect to the Z direction center of the plurality of positive electrode current collectors 110. Therefore, the sealing body 502 and the plurality of positive electrode current collectors 110 can be brought close to each other as compared to when the first extended bundle portion 114a is positioned at the Z direction center of the plurality of positive electrode current collectors 110, thereby making it easier to detect a more accurate temperature of the plurality of positive electrode current collectors 110 by the temperature sensor 500. However, the first extended bundle portion 114a may be positioned at the Z direction center of the plurality of positive electrode current collectors 110.

As shown in FIG. 3, the rear end surface of the front recessed space 216 is positioned behind the rear surface of the front lid plate 212. Therefore, the depth of the front protrusion 214 in the X direction can be increased as compared to when the front recessed space 216 is provided in the front lid plate 212 having the same thickness as the thickness of the front lid plate 212 in the X direction shown in FIG. 3 without providing the front protrusion 214, and the volume of the front recessed space 216 can be increased. Furthermore, the dimension of the front lid member 210 in the X direction can be reduced as compared to when the front recessed space 216 is provided in the front lid plate 212 having the same dimension as the dimension of the front protrusion 214 in the X direction shown in FIG. 3 without providing the front protrusion 214, and the dimension of the battery cell 10 in the X direction can be reduced.

The front protrusion 214 can function as a release valve that discharges a gas generated from the battery element 100 in the event of abnormal heat generation of the battery element 100. When the abnormal heat generation occurs in the battery element 100, a high-temperature gas may be generated from the battery element 100. The melting point of the front protrusion 214 is equal to or lower than the temperature around the front protrusion 214 when the abnormal heat generation occurs in the battery element 100. Therefore, when the abnormal heat generation occurs in the battery element 100, at least a part of the front protrusion 214 can be melted. By melting at least a part of the front protrusion 214, the front protrusion 214 can discharge a gas generated from the battery element 100 when the abnormal heat generation occurs in the battery element 100. Therefore, in the embodiment, the functionality of the front lid member 210 can be improved as compared to a when the front protrusion 214 is not provided.

To discharge a gas generated from the battery element 100 in the event of the abnormal heat generation of the battery element 100, the thickness between the outer surface of the front protrusion 214 and the inner surface of the front recessed space 216 in the front lid member 210 may be relatively thin, and may be, for example, equal to or less than the thickness of the front lid plate 212 in the X direction. In order to preferentially discharge a gas from a portion between the rear end surface of the front protrusion 214 and the rear end surface of the front recessed space 216 in the front lid member 210, the thickness of the portion between the rear end surface of the front protrusion 214 and the rear end surface of the front recessed space 216 in the front lid member 210 may be, for example, less than the thickness of a portion between the outer surface of the front protrusion 214 around the X direction and the inner surface of the front recessed space 216 around the X direction in the front lid member 210.

In the example shown in FIG. 3, at least a part of the temperature sensor 500 is disposed inside the front recessed space 216. However, the temperature sensor 500 may not be disposed inside the front recessed space 216. Even if the temperature sensor 500 is not disposed inside the front recessed space 216, the front protrusion 214 can function a release valve that releases at least a part of the front recessed space 216 when the abnormal heat generation occurs in the battery element 100. Therefore, the functionality of the front lid member 210 can be improved as compared to when the front protrusion 214 is not provided.

The element disposed inside the front recessed space 216 is not limited to the temperature sensor 500.

Next, an example of a manufacturing method of the battery cell 10 according to the embodiment will be described.

First, the two battery elements 100 are stacked on each other. The battery element 100 includes at least one positive electrode, at least one negative electrode, and at least one separator. A plurality of positive electrode current collectors 110 and a plurality of negative electrode current collectors are drawn out from the battery element 100. Next, the tip end parts that are the extended bundle portions 114 of the plurality of positive electrode current collectors 110 are joined to each other by a joining method such as ultrasonic welding to be bundled together, thereby forming the tapered bundle portion 112 and the extended bundle portion 114. Before the extended bundle portion 114 and the front conductor 310 are joined to each other, the tip end part that is the second extended bundle portion 114b of the extended bundle portion 114 is not bent with respect to the base end part that is the first extended bundle portion 114a of the extended bundle portion 114, and the extended bundle portion 114 is drawn out toward the front of each battery element 100. Similarly, the tip end parts of the plurality of negative electrode current collectors are also joined to each other to be bundled together.

Next, the front lid member 210 and the front conductor 310 are prepared. Next, the front lid member 210 and the front conductor 310 are attached to each other when the front protrusion 214 of the front lid member 210 penetrates the conductor hole 313 of the front barrier conductor 312 and the front protruding conductor 314 of the front conductor 310 penetrates the central hole 213 of the front lid plate 212. Next, the tip end part that is the second extended bundle portion 114b of the extended bundle portion 114 and a surface of the front barrier conductor 312 on a side opposite to the front lid plate 212 are joined to each other by, for example, a joining method such as laser welding and ultrasonic welding. Next, the tip end part that is the second extended bundle portion 114b of the extended bundle portion 114 is bent with respect to the first extended bundle portion 114a that is the base end part of the extended bundle portion 114, and the front end surface of each battery element 100 is covered with the front lid plate 212. Similarly, the plurality of negative electrode current collectors and the rear conductor 320 are also joined to each other.

Next, the exterior film 400 is wound around the battery element 100, the front lid member 210, and the rear lid member 220 about the X direction in one turn. Next, the outer peripheral portion of the front lid member 210 around the X direction and the inner peripheral portion of the front end part of the exterior film 400 around the X direction are joined to each other by thermal welding to form a sealing portion between the outer peripheral portion of the front lid member 210 around the X direction and the inner peripheral portion of the opening of the front end part of the exterior film 400 around the X direction. Next, the outer peripheral portion of the rear lid member 220 around the X direction and the inner peripheral portion of the rear end part of the exterior film 400 around the X direction are joined to each other by thermal welding to form a sealing portion between the outer peripheral portion of the rear lid member 220 around the X direction and the inner peripheral portion of the rear end part of the exterior film 400 around the X direction. When these sealing portions are formed, the front lid member 210, the rear lid member 220, and the exterior film 400 form an accommodating space that accommodates the battery element 100, the plurality of positive electrode current collectors 110, and the plurality of negative electrode current collectors. The exterior film 400 includes two drawn portions that are drawn out from both ends of the winding portion wound around the battery element 100, the front lid member 210, and the rear lid member 220 in the X direction for one turn.

Next, the accommodating space is injected with the electrolyte solution through a gap between the two drawn portions of the exterior film 400. Next, the accommodating space is evacuated through a gap between the two drawn portions of the exterior film 400. Next, the two drawn portions of the exterior film 400 are joined to each other by thermal welding to form a sealing portion, and the accommodating space is vacuum-sealed.

As described above, the battery cell 10 according to the embodiment is manufactured.

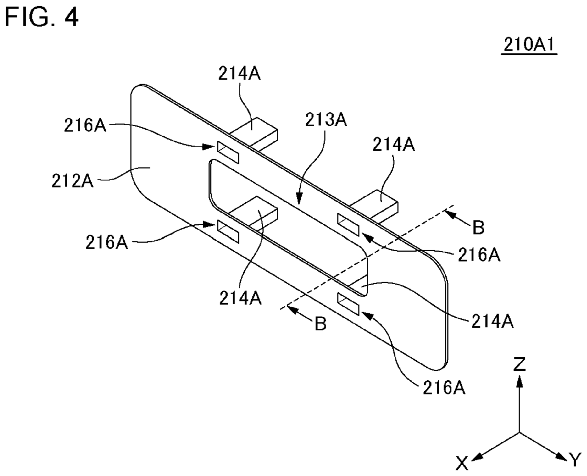

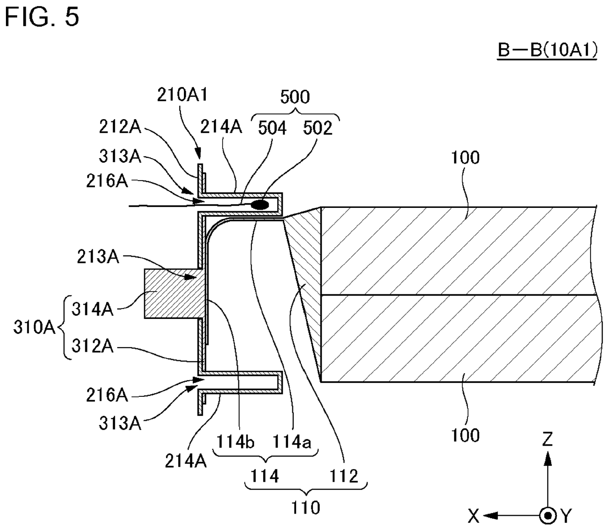

FIG. 4 is a perspective view of a front lid member 210A1 according to a first variant of the embodiment. FIG. 5 is a cross-sectional view of the battery cell 10A1 according to the first variant of the embodiment at a position corresponding to the cross section taken along line B-B of FIG. 4. The battery cell 10A1 according to the first variant of the embodiment is the same as the battery cell 10 according to the embodiment except for the following points.

As shown in FIG. 4, the front lid member 210A1 includes a front lid plate 212A and four front protrusions 214A. The front lid member 210A1 defines four front recessed spaces 216A. Each front recessed space 216A according to the variant is recessed from the front side of the front lid member 210A1 toward each front recessed space 216A, in the same manner as the front recessed space 216 according to the embodiment.

As shown in FIG. 4, two front protrusions 214A of the four front protrusions 214A and two front recessed spaces 216A of the four front recessed spaces 216A are positioned on the upper side with respect to the center portion of the front lid plate 212A in the Y direction and the Z direction. These two front protrusions 214A are arranged in the Y direction together with these two front recessed spaces 216A. The other two front protrusions 214A of the four front protrusions 214A and the other two front recessed spaces 216A of the four front recessed spaces 216A are positioned on the lower side with respect to the center portion of the front lid plate 212A in the Y direction and the Z direction. These other two front protrusions 214A are arranged in the Y direction together with these two other front recessed spaces 216A.

As shown in FIG. 5, a front conductor 310A according to the variant includes a front barrier conductor 312A and a front protruding conductor 314A. The front barrier conductor 312A covers at least a part of the rear surface of the front lid plate 212A when the front protruding conductor 314A penetrates the central hole 213A of the front lid plate 212A and each front protrusion 214A penetrates each conductor hole 313A of the front barrier conductor 312A.

Hereinafter, as necessary, in FIG. 5, the front protrusion 214A and the front recessed space 216A positioned on the upper side with respect to the Z direction center portion of the front lid plate 212A are referred to as an upper front protrusion 214A and an upper front recessed space 216A, respectively, and in FIG. 5, the front protrusion 214A and the front recessed space 216A positioned on the lower side with respect to the Z direction center portion of the front lid plate 212A are referred to as a lower front protrusion 214A and a lower front recessed space 216A, respectively.

As shown in FIG. 5, at least a part of the temperature sensor 500 is disposed inside the upper front recessed space 216A. In FIG. 4, the temperature sensor 500 may be disposed in only one or both of the two upper front recessed spaces 216A positioned on the upper side with respect to the center portion of the front lid member 210A1 in the Y direction and the Z direction. As shown in FIG. 5, at least a part of the first extended bundle portion 114a is offset to the upper side with respect to the Z direction center of the plurality of positive electrode current collectors 110. Therefore, in FIG. 5, the temperature sensor 500 is disposed inside the upper front recessed space 216A rather than inside the lower front recessed space 216A, so that the sealing body 502 and the plurality of positive electrode current collectors 110 can be brought close to each other, thereby making it easier to detect a more accurate temperature of the plurality of positive electrode current collectors 110 by the temperature sensor 500.

As shown in FIG. 5, the temperature sensor 500 is not disposed inside the lower front recessed space 216A. In FIG. 4, for example, the temperature sensor 500 is not disposed in any of the two front recessed spaces 216A positioned on the lower side with respect to the center portion of the front lid member 210A1 in the Y direction and the Z direction. Therefore, a member that hinders the flow of the gas is not present inside the lower front recessed space 216A as compared to when the temperature sensor 500 is disposed inside the lower front recessed space 216A, and the lower front protrusion 214A can easily function as a release valve that discharges a gas generated from the battery element 100 in the event of abnormal heat generation of the battery element 100.

In the example shown in FIGS. 4 and 5, the front lid member 210A1 defines the plurality of front recessed spaces 216A. Therefore, whether or not to provide the temperature sensor 500 can be selected for each of the plurality of front recessed spaces 216A.

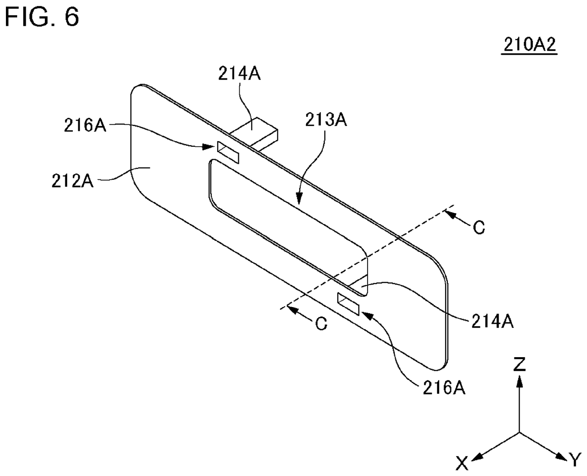

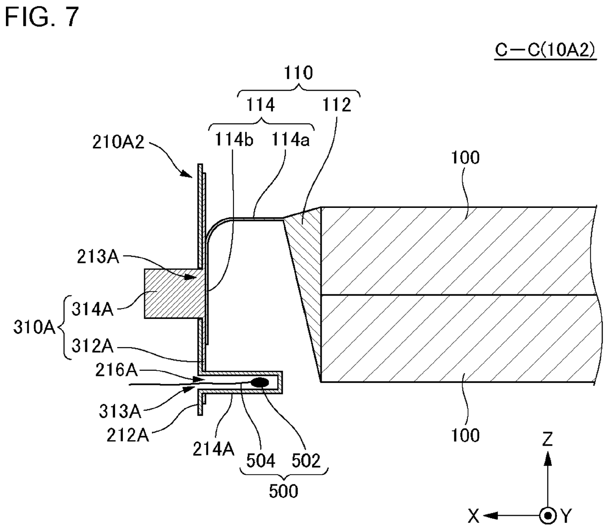

FIG. 6 is a perspective view of a front lid member 210A2 according to a second variant of the embodiment. FIG. 7 is a cross-sectional view of the battery cell 10A2 according to the second variant of the embodiment at a position corresponding to the cross section taken along line C-C of FIG. 6. The battery cell 10A2 according to the second variant of the embodiment is the same as the battery cell 10 according to the embodiment except for the following points.

As shown in FIG. 6, one front protrusion 214A may be provided in each of the upper portion and the lower portion with respect to the center portion of the front lid plate 212A in the Y direction and the Z direction. As shown in FIG. 6, the front protrusion 214A provided on the upper side with respect to the center portion of the front lid plate 212A in the Y direction and the Z direction and the front protrusion 214A provided on the lower side with respect to the center portion of the front lid plate 212A in the Y direction and the Z direction may be offset to opposite sides of the Y direction center of the front lid plate 212A.

As shown in FIG. 7, the sealing body 502 may be disposed inside the front recessed space 216A positioned on the lower side with respect to the Z direction center portion of the front lid plate 212A. In the example shown in FIG. 7, the sealing body 502 and the tapered bundle portion 112 can be brought close to each other as compared to when the sealing body 502 is disposed inside the front recessed space 216A positioned on the upper side with respect to the Z direction center portion of the front lid plate 212A, thereby making it easier to detect a more accurate temperature of the plurality of positive electrode current collectors 110 in the tapered bundle portion 112.

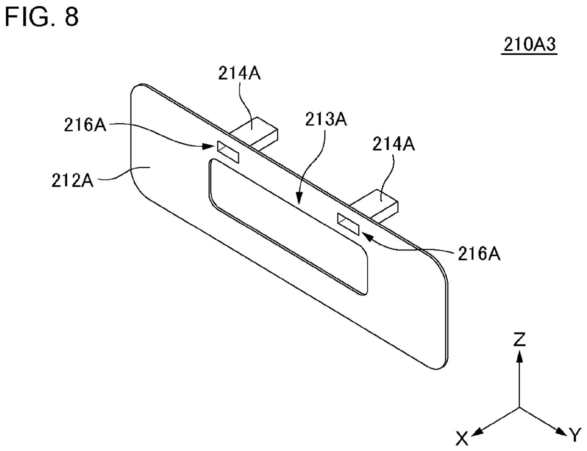

FIG. 8 is a perspective view of a front lid member 210A3 according to a third variant of the embodiment. The front lid member 210A3 according to the third variant of the embodiment is the same as the front lid member 210 according to the embodiment except for the following points.

As shown in FIG. 8, two front protrusions 214A may be provided on the upper side with respect to the Z direction center portion of the front lid plate 212A without providing the front protrusion 214A on the lower side with respect to the Z direction center portion of the front lid plate 212A. Alternatively, two front protrusions 214A may be provided on the lower side with respect to the Z direction center portion of the front lid plate 212A without providing the front protrusion 214A on the upper side with respect to the Z direction center portion of the front lid plate 212A.

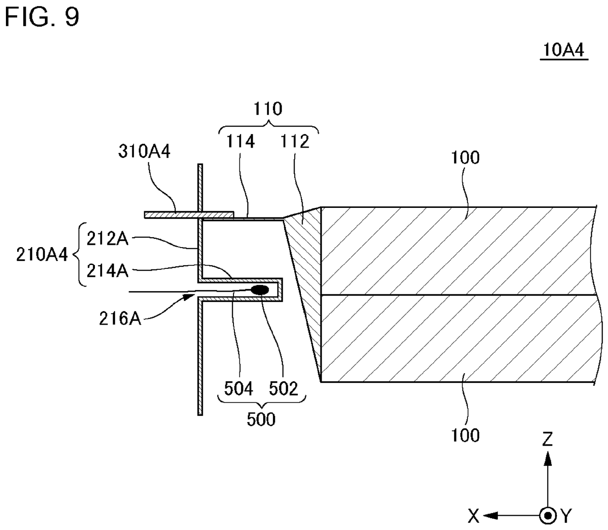

FIG. 9 is a cross-sectional view of a battery cell 10A4 according to a fourth variant of the embodiment. The battery cell 10A4 according to the fourth variant of the embodiment is the same as the battery cell 10 according to the embodiment except for the following points.

The front lid member 210A4 includes a front lid plate 212A and a front protrusion 214A. The front conductor 310A4 extends in parallel to the X direction and penetrates the upper portion of the front lid plate 212A. The front protrusion 214A and the front recessed space 216A are positioned at the Z direction center portion of the front lid plate 212A. Therefore, the sealing body 502 can be disposed on the front side with respect to the Z direction center portion of the two battery elements 100.

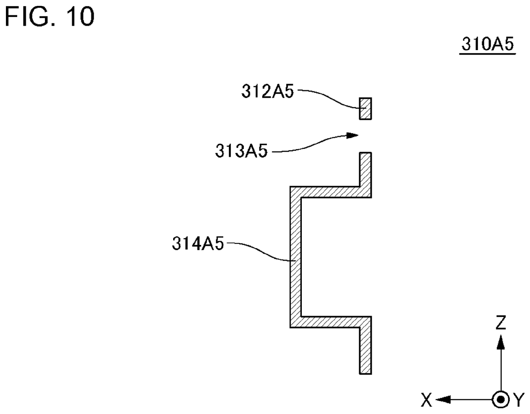

FIG. 10 is a cross-sectional view of a front conductor 310A5 according to a fifth variant of the embodiment. FIG. 10 shows a cross section of a front conductor 310A5 according to the fifth variant of the embodiment at the Y direction center portion.

As shown in FIG. 10, the front protruding conductor 314A5 may be protruded forward with respect to the front barrier conductor 312A5 by embossing. A space recessed forward with respect to the rear surface of the front barrier conductor 312A5 is present behind the front protruding conductor 314A5. A conductor hole 313A5 through which the front protrusion of the front lid member penetrates is provided in the front barrier conductor 312A5 in the same manner as in the embodiment. When the front protruding conductor 314A5 is formed by the embossing, the front conductor 310A5 can be lightened as compared to when the front protruding conductor 314A5 is solid.

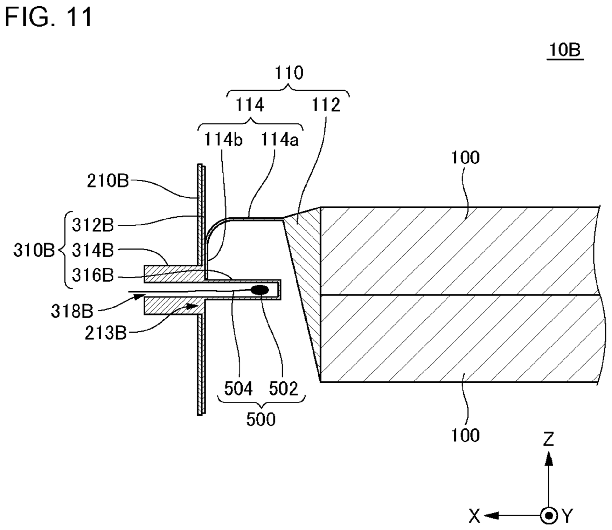

FIG. 11 is a cross-sectional view of a battery cell 10B according to the variant. The battery cell 10B according to the variant is the same as the battery cell 10 according to the embodiment, except for the following points.

The front conductor 310B includes a front barrier conductor 312B, a front protruding conductor 314B, and a front protrusion 316B. The front conductor 310B is a structure that is spaced from the front end surface of the battery element 100 by a predetermined distance in the X direction and at least partially faces the front end surface.

The front barrier conductor 312B covers at least a part of the rear surface of the front lid member 210B. The rear surface of the front barrier conductor 312B and the front surface of the second extended bundle portion 114b are joined to each other by, for example, a joining method such as laser welding and ultrasonic welding.

The front protruding conductor 314B is positioned at the center portion of the front surface of the front barrier conductor 312B in the Y direction and the Z direction. The front protruding conductor 314B and the front barrier conductor 312B are integrated with each other. When the front barrier conductor 312B covers at least a part of the rear surface of the front lid member 210B, the front protruding conductor 314B penetrates a central hole 213B provided at the center portion of the front lid member 210B in the Y direction and the Z direction.

The front protrusion 316B is positioned on the rear side of the front barrier conductor 312B. As viewed from the X direction, the front protrusion 316B is positioned at the center portion of the rear surface of the front barrier conductor 312B in the Y direction and the Z direction. The front protrusion 316B and the front barrier conductor 312B are integrated with each other. The position of the front protrusion 316B with respect to the front barrier conductor 312B is not limited to the example shown in FIG. 11. A plurality of front protrusions 316B may be provided in the front barrier conductor 312B.

The front conductor 310B defines a front recessed space 318B. The front recessed space 318B is recessed from the front side of the front protruding conductor 314B toward the front protrusion 316B. The front recessed space 318B is open forward of the front protruding conductor 314B through a through-hole that penetrates the front protruding conductor 314B in the X direction.

The sealing body 502 is disposed at the rear end part of the front recessed space 318B. The dumet wire 504 is drawn out from the rear end part of the sealing body 502 to the outside of the front recessed space 318B through an opening on the front side of the front recessed space 318B. Therefore, the front recessed space 318B functions as an accommodating space for accommodating at least a part of the temperature sensor 500. Therefore, in the variant, the functionality of the front conductor 310B can be improved as compared to when the front recessed space 318B is not provided.

The front protrusion 316B according to the variant may function as a release valve that discharges a gas generated from the battery element 100 in the event of abnormal heat generation of the battery element 100, in the same manner as the front protrusion 214 according to the embodiment. When the front protrusion 316B can function as a release valve, the functionality of the front conductor 310B can be improved as compared to when the front protrusion 316B is not provided.

Although the embodiments and variants of the present invention have been described above with reference to the accompanying drawings, these are merely examples of the present invention, and various other configurations may be employed.

The structure in which the front protrusion and the front recessed space are provided is not limited to the front lid member or the front conductor. The front protrusion and the front recessed space can be provided in a structure that is spaced from the front end surface of the battery element 100 by a predetermined distance and at least partially faces the front end surface.

For example, in the embodiment, the positive electrode terminal such as the front protruding conductor 314 and the negative electrode terminal such as the rear protruding conductor are disposed on opposite sides of the battery element 100 in the X direction. However, both the positive electrode terminal and the negative electrode terminal may be disposed only on one of the front side or the rear side of the battery element 100 in the X direction. When both the positive electrode terminal and the negative electrode terminal are disposed only on one of the front side and the rear side of the battery element 100 in the X direction, for example, the front end part and the rear end part of the battery element 100 are covered with two lid members. Alternatively, only the side from which the positive electrode terminal and the negative electrode terminal of the battery element 100 are drawn out may be covered with the lid member. When only the side of the battery element 100 from which the positive electrode terminal and the negative electrode terminal are drawn out is covered with the lid member, the exterior film 400 may be sealed and folded along the battery element 100 on the side of the battery element 100 opposite to the lid member.

This application claims priority based on Japanese Patent Application No. 2023-116468 filed on July 18, 2023, the entire disclosure of which is incorporated herein by reference.

### REFERENCE SIGNS LIST

10, 10A1, 10A2, 10A4, 10B battery cell, 100 battery element, 110 positive electrode current collector, 112 tapered bundle portion, 114 extended bundle portion, 114a first extended bundle portion, 114b second extended bundle portion, 210, 210A1, 210A2, 210A3, 210A4, 210B front lid member, 212, 212A front lid plate, 213, 213A, 213B central hole, 214, 214A front protrusion, 216, 216A front recessed space, 220 rear lid member, 222 rear lid plate, 224 rear protrusion, 310, 310A, 310A4, 310A5, 310B front conductor, 312, 312A, 312A5, 312B front barrier conductor, 313, 313A, 313A5 conductor hole, 314, 314A, 314A5, 314B front protruding conductor, 316B front protrusion, 318B front recessed space, 320 rear conductor, 322 rear barrier conductor, 400 exterior film, 500 temperature sensor, 502 sealing body, 504 dumet wire

## Claims

1. A battery cell comprising:
a battery element; and
a structure that is spaced from an end surface of the battery element by a predetermined distance and at least partially faces the end surface,
wherein the structure has a protrusion that is positioned on a side where the end surface of the battery element is positioned, and
the structure defines a recessed space that is recessed from a side of the structure opposite to the side where the end surface of the battery element is positioned toward the protrusion.

2. The battery cell according to claim 1, further comprising a temperature sensor at least a part of which is arranged inside the recessed space.

3. The battery cell according to claim 1 or 2, wherein the protrusion discharges a gas generated from the battery element when abnormal heat generation occurs in the battery element.

4. The battery cell according to any one of claims 1 to 3, wherein the structure defines a plurality of the recessed spaces.

5. The battery cell according to any one of claims 1 to 4, wherein the structure has a lid member that covers the end surface of the battery element.

6. The battery cell according to any one of claims 1 to 5, wherein the structure has a conductor that is electrically connected to the battery element.
